# EUROPEAN PATENT SPECIFICATION

(11) **EP 0 771 232 B1**
(45) Date of publication and mention of the grant of the patent: **14.11.2001**
(21) Application number: 95924806.3
(22) Date of filing: 18.07.1995
(51) Int. Cl.: B01D 61/36

(54) **METHOD AND APPARATUS FOR SEPARATING LIQUID-LIQUID MIXTURES**
METHODE UND VORRICHTUNG ZUR TRENNUNG VON FLÜSSIG-FLÜSSIG-MISCHUNGEN
PROCEDE ET APPAREIL DE SEPARATION DE MELANGES LIQUIDE-LIQUIDE

(30) Priority: 18.07.1994 AU PM685794
(43) Date of publication of application: 07.05.1997
(73) Proprietor: THE UNIVERSITY OF QUEENSLAND, St Lucia, QLD 4069 (AU)
(72) Inventor: GANNON, Raymond, Peter, St. Lucia, QLD 4067 (AU)
(74) Representative: March, Gary Clifford
(86) International application number: PCT/AU95/00432
(87) International publication number: WO 96/02316

(56) References cited:
- EP-A- 0 655 274
- AU-A- 8 024 294
- US-A- 4 222 871
- US-A- 5 089 122
- US-A- 5 104 810
- PATENT ABSTRACTS OF JAPAN vol. 008, no. 077 (C-218), 10 April 1984 & JP 59 000302 A (ASAHI KASEI KOGYO KK), 5 January 1984, & DATABASE WPI Section Ch, Week 8407 Derwent Publications Ltd., London, GB; Class A18, AN 84-039230
- PATENT ABSTRACTS OF JAPAN vol. 017, no. 102 (C-1031), 2 March 1993 & JP 04 290597 A (HITACHI LTD), 15 October 1992, & DATABASE WPI Section Ch, Week 9248 Derwent Publications Ltd., London, GB; Class D15, AN 92-393156
- JOURNAL OF MEMBRANE SCIENCE, vol. 91, no. 3, 1 June 1994, pages 249-258, XP000488377 TIMASHEV S F ET AL: "PERVAPORATION INDUCED BY ELECTRIC CURRENT"
- DERWENT ABSTRACT, Accession No. 94-329166/41, Class E17; & JP,A,06 254 354 (MITSUBISHI KASEI CORP), 13 September 1994.
- PATENT ABSTRACTS OF JAPAN, C-218, page 18; & JP,A,57 109 742 (ASAHI KASEI KOGYO K.K.), 5 January 1984.

## Description

### TECHNICAL FIELD

This invention relates to a method and apparatus for separating liquid-liquid mixtures and relates particularly to separation of liquid-liquid mixtures which may be temperature sensitive, flammable, toxic, or otherwise unsuitable, for separation using heat distillation. The method and apparatus is particularly suitable for separating undesirable liquid components from bio-fluids, such as blood plasma.

### BACKGROUND ART

A well known liquid-liquid separation technique involves distillation whereby liquids of different boiling points can be separated. For liquids having close boiling points, separation efficiency is enhanced by using distillation columns. Distillation is unsuitable for many types of liquids including temperature-sensitive liquids (i.e., bio-fluids, certain liquid food products), highly flammable liquids, such as the low molecular weight ethers, liquids which have toxic vapours, or liquid-liquid mixtures where separation must be done quickly.

Membrane separation is used where separation of liquid mixtures by distillation is undesirable. Membrane separation is more commonly used to remove liquids from a liquid/dissolved solid mixture. The methodology behind membrane separation can be very complex and can include osmotic pressure, relative vapour pressures, diffusion co-efficient, molecular size, molecular shape and molecular charge.

A known type of liquid-liquid separation using membranes involves a combined permeation/evaporation method. A liquid-liquid mixture is passed into a first chamber which is separated from a second chamber by a membrane. A pressure differential is applied across the membrane and by correct choice of the membrane, a particular component in the liquid-liquid mixture will permeate across the membrane selectively in preference to other components. This type of membrane separation is described in European patent specification 0346739 and Japanese patent specification 1-159007. While this technique allows separation of temperature-sensitive components, a disadvantage with the technique is that it is relatively slow, making it less suitable for separation of mixtures which are unstable over time, or which must be treated quickly. For instance, slow membrane separation techniques are not suitable for purification of bio-fluids which must be removed from a patient's body, purified and re-introduced into the patient's body, as quickly as possible. The slow membrane separations are also unsuitable in many pharmaceutical, medical and beverage applications where it is desirable to achieve separation as quickly as possible.

### OBJECT OF THE INVENTION

The present invention provides a method and an apparatus which can at least partially separate liquid-liquid mixtures in a manner which may overcome the abovementioned disadvantages. The method utilises a membrane to separate liquid-liquid mixtures and is characterised by converting the initial liquid-liquid mixture into a fine spray before contacting the membrane. The combination of membrane separation with initial atomisation of the liquid-liquid mixtures can produce superior results.

In one form, the invention resides in a method for separating a liquid-liquid mixture, the method comprising the steps of contacting the liquid-liquid mixture against one side of a separating membrane in the form of a spray.

The liquid-liquid mixture may be atomised into a fine droplet spray by any suitable method or apparatus. A nozzle may be used to convert the liquid mixture into a spray of fine droplets. The spray may be generated within a gas flow and this may be achieved via a venturi type device. The gas may be an inert or reactive gas and may include compressed air, steam, nitrogen, carbon dioxide, sulphur dioxide, ethylene oxide, fluorine, hydrogen, argon, or mixtures thereof. The gas or gas mixture may be able to carry an electric charge.

The membrane may comprise a rigid or flexible membrane. A rigid perforated/porous ceramic or metal membrane may be used. An alternative form of membrane is a flexible polymer membrane. Known membranes may be used, these including semi-permeable flexible silicone rubber films which may be impregnated with zeolite materials. The zeolite materials can provide a range of pore sizes which can correspond which desired molecular sizes of liquid mixture components to be separated. The membrane may include a flexible nitrilebutadiene rubber, polyisobutylene rubber or styrenebutadiene co-polymer rubbers. The membrane may be hydrophobic. It is preferred that the membrane is an elastomeric polymer material impregnated with zeolites or other appropriate material of known absorption/permeability characteristics. It is also preferred that the membrane is able to carry an electric charge and this can be achieved either by choice of the membrane itself, choice of impregnated substances on or in the membrane, or by supporting the membrane on a support which can be charged.

To assist in the separation process, the membrane and/or the liquid-liquid mixture may be subjected to an electric charge. The liquid-liquid spray may be charged by admixture with a gas which can be charged. The charge may be positive or negative. The membrane may comprise or include conductive components to allow it to accommodate a charge. Thus, the membrane may be impregnated with micro-porous compounds such as zeolite which have been sensitised with conductive components. Alternatively, or in addition to the above, the membrane may be associated with a support which may be subject to a charge.

To assist in the separation process, a pressure differential may be provided across the membrane. Suitably, the outlet side of the membrane is at a reduced pressure relative to the inlet side of the membrane.

For flexible or delicate membranes, a support may be provided. The support may comprise a mesh or grid. The support may extend adjacent the outlet side of the membrane. The support may be conductive and may be able to be charged either positively or negatively. The support may also be able to be heated.

In another form, the invention resides in an apparatus for at least partially separating a liquid-liquid mixture, the apparatus comprising a first inlet chamber and a second outlet chamber, a membrane separating the inlet and outlet chambers, and means to convert the liquid-liquid mixture into a spray before contact with the membrane.

The inlet and outlet chambers may be subject to pressure variation and it is preferred that the outlet chamber is of reduced pressure relative to the inlet chamber.

The means to convert the liquid-liquid mixture into a spray may comprise a nozzle. A gas flow may be used to assist in converting a liquid-liquid mixture into a spray and this may be as described above.

The membrane and support may also be as described above.

Suitably, the inlet chamber includes means to return liquid in the inlet chamber to a liquid reservoir or to the means to convert the liquid into a spray. The outlet chamber may be provided with a drain.

### BRIEF DESCRIPTION OF THE DRAWINGS

An embodiment of the invention will be described with reference to the following figures in which
Figure 1 illustrates a separating apparatus utilising a planar membrane;
Figure 2 illustrates a separating apparatus using a cylindrical membrane.
Figure 3 is a side view of the apparatus of Figure 2.

### BEST MODE

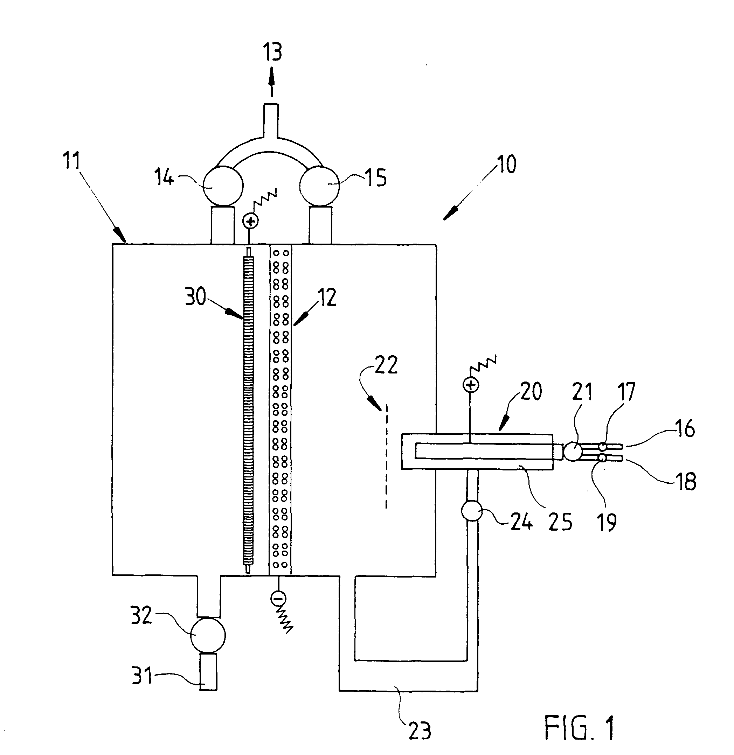

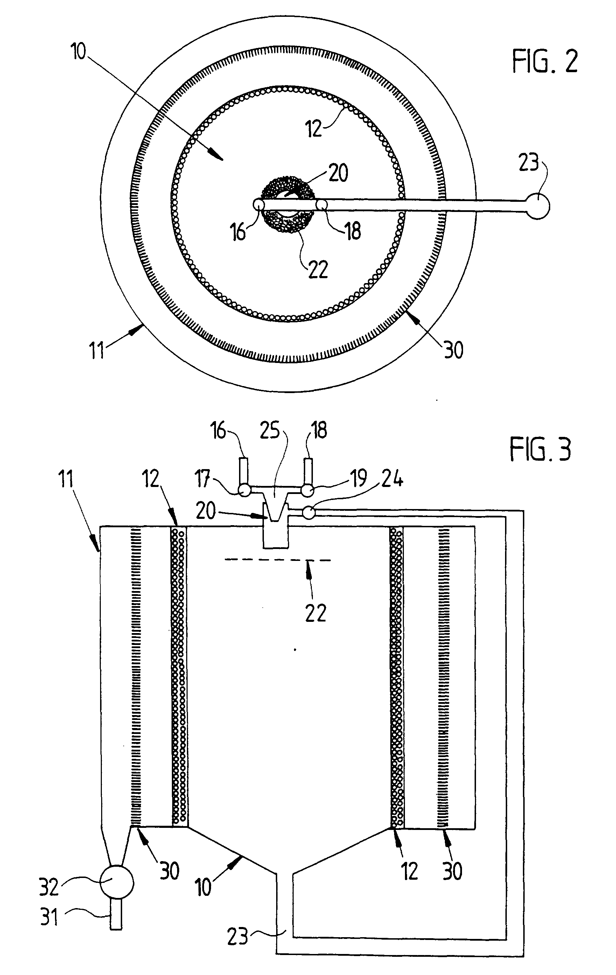

Referring to Figures 1, 2 and 3 there are illustrated two versions of an apparatus to at least partially separate a liquid-liquid mixture, the apparatus of Figure 1 having a planar membrane, and the apparatus of Figure 2 being substantially cylindrical with a cylindrical membrane. Like numbers have been used to illustrate like parts.

The apparatus comprises a first inlet chamber 10 and a second outlet chamber 11. Chambers 10 and 11 are separated by a flexible semi-permeable membrane 12. Chambers 10 and 11 can be evacuated by connection of the chambers to a vacuum source 13 (not shown). Valves 14, 15 are used to regulate the vacuum within chambers 10 and 11. The chambers are designed to operate under pressures of about 25mbar.

A liquid-liquid mixture which is to be separated passes through inlet 16, the flow rate being regulated by valve 17. The liquid-liquid mixture is mixed with a gas passing through conduit 18 which is again controlled by a valve 19. The liquid and gas mixtures are passed into an atomising nozzle 20, the rate of which can be determined by valve 21. Nozzle 20 atomises the liquid gas mixture and sprays it into chamber 10. In front of nozzle 20 and in chamber 10 is located a conductive micro-mesh screen 22. Screen 22 functions to assist in droplet dispersion and assists electric charge/vapour transfer. As nozzle 20 introduces the spray into chamber 10, chamber 10 becomes pressurised relative to chamber 11 which results in a pressure differential being formed on each side of membrane 12. Any spray which condenses into larger droplets or a liquid can be recycled through conduit 23 back to nozzle 20, the rate of recycle being determined by valve 24. The forward part of nozzle 20 is within a vacuum sleeve 25 to allow recycled liquid to pass through conduit 23 and re-emerge into chamber 10 as a spray.

A support 30 in the form of a conductive mesh or grid is positioned in outlet chamber 11 and slightly spaced from flexible membrane 12. When chamber 10 becomes positively pressurised relative to chamber 11 due to spray being introduced into chamber 10, membrane 12 is pushed against support 30. Support 30 can be electrically charged as can membrane 12. Nozzle 20 can also be electrically charged and in the embodiment, nozzle 20 is negatively charged while membrane 12 is positively charged. The effect of the charge is to facilitate passage of spray droplets towards membrane 12. Membrane 12 functions to separate the liquid-liquid mixture and the component which preferentially passes through membrane 12 can be collected in chamber 11 and passed through conduit 31 which is controlled by valve 32.

In use, atomised inward liquid enters the inlet compartment which is pressurised to approximately 25mbar. The reduced pressure in compartment 10 further encourages or promotes reduction of droplet size. The outlet compartment 11 is also initially pressurised to approximately 25mbar. As liquid sprays into compartment 10, compartment 10 becomes positively pressurised which causes flexible membrane 12 to deform towards support 30. The charged membrane will attract the desired size of molecule to itself. The selective permeability of the impregnated compounds and the reduced atmospheric pressure on the outlet side of the membrane will cause the desired molecules to pass through the membrane. Support 30 can be electrically charged to further attract molecules out of the membrane. Support 30 may also be heated to assist the release through vaporisation of molecules passing through the membrane, and the operating temperature of support 30 can be in the range of 10 - 400°C. Liquid passing through the membrane can be collected in reservoirs via pressure-controlled non-return valves, or condensed in cold traps, if desired. Partially separated liquids in the inlet compartment can be recycled to the feed liquid flow via a venturi pick-up until the desired level of separation has been reached.

Membrane 12 may also be energised electrically to generate heat within its structure, thus encouraging transport of heated molecules through the membrane into the lower pressure outlet compartment.

## Claims

1. A method of separating liquid from a liquid-liquid mixture, the method **characterised in that** it includes the step of contacting the liquid-liquid mixture against one side of a separating membrane in the form of a spray such that the liquid to be separated preferentially passes through the membrane for collection on the other side of the membrane.

2. The method of claim 1 wherein the spray is in the form of an atomised spray or fine droplet spray.

3. The method of claim 2 wherein the separating membrane is a semi-permeable membrane.

4. The method of claim 3 wherein the membrane is selected from the group consisting of a rigid membrane, a flexible membrane, a rigid perforated ceramic membrane, a rigid perforated metal membrane, a flexible polymer membrane, a semi-permeable silicone rubber membrane, membranes impregnated with zeolite materials, a flexible nitrilebutadiene rubber membrane, a polyisobutylene rubber membrane, a styrenebutadiene rubber membrane.

5. The method of claim 3 wherein the membrane is able to be electrically charged.

6. The method of claim 2 wherein the liquid-liquid mixture passes through a nozzle to convert it into a spray.

7. The method of claim 6 wherein the mixture is mixed with a gas flow prior to passing through the nozzle.

8. The method of claim 7 wherein the gas can carry an electric charge.

9. The method of claim 1 wherein a pressure differential is provided across the membrane with the higher pressure side being the side which contacts the spray.

10. The method of claim 9 wherein a support for the membrane is provided, the support comprising a mesh extending adjacent the outlet side of the membrane.

11. The method of claim 10 wherein the support can be electrically charged.

12. The method of claim 10 wherein the support can be heated.

13. An apparatus for at least partially separating a liquid-liquid mixture, the apparatus comprising a first inlet chamber and a second outlet chamber, a membrane separating the inlet and outlet chambers, and means to convert liquid-liquid mixture into a spray comprising liquid to be separated before contact of the spray with the membrane in the inlet chamber such that the liquid to be separated preferentially passes through the membrane for collection on the other side of the membrane.

14. The apparatus of claim 13 wherein the inlet chamber, in use, is of higher pressure than the outlet chamber.

15. The apparatus of claim 14 wherein a nozzle converts the liquid-liquid mixture into the spray.

## Patentansprüche

1. Ein Verfahren zur Trennung von Flüssigkeiten aus flüssig-flüssig Mischungen, wobei das Verfahren **dadurch gekennzeichnet ist, daß** es den Schritt beinhaltet des Kontaktierens des flüssig-flüssig Gemisches in Form eines Sprühnebels mit einer Seite einer Trennmembran, so das die zu trennende Flüssigkeit vorzugsweise durch die Membran hindurchtritt, zum Sammeln auf der anderen Seite de Membran.

2. Verfahren nach Anspruch 1, worin der Sprühnebel die Form eines atomisierten Sprühnebels oder eines Sprühnebels mit feinen Tröpfchen aufweist.

3. Verfahren nach Anspruch 2, worin die Trennmembran eine semipermeable Membran ist.

4. Verfahren nach Anspruch 3, worin die Membran ausgewählt ist aus der Gruppe bestehend aus einer steifen Membran, einen flexiblen Membran, einer steifen Membran, einer flexiblen Membran, einer steifen perforierten keramischen Membran, einer steifen perforierten Metallmembran, einer flexiblen Polymermembran, einer semipermeablen Silikonkautschukmembran, Membranen die mit zeolitischen Materialien impregniert sind, einer flexiblen nitrilbutagien-Kautschukmembran, einer polyisobutulen- Kautschukmembran, einer styrolbutagien- Kautschukmembran.

5. Verfahren nach Anspruch 3, worin die Membran in der Lage ist elektrisch geladen zu sein.

6. Verfahren nach Anspruch 2, worin die flüssig-flüssig Mischung durch eine Düse hindurchtritt, um in einen Sprühnebel umgewandelt zu werden.

7. Verfahren nach Anspruch 6, worin das Gemisch mit einem Gasfluß vor dem Durchtreten durch die Düse gemischt wird.

8. Verfahren nach Anspruch 7, worin das Gas eine elektrische Ladung tragen kann.

9. Verfahren nach Anspruch 1, worin ein Druckdifferential über die Membran bereitgestellt ist, wobei die Seite mit dem höheren Druck die Seite ist, welche den Sprühnebel kontaktiert.

10. Verfahren nach Anspruch 9, worin ein Träger für die Membran bereitgestellt ist, wobei der Träger ein Netz umfaßt, das sich anliegend an die Auslaßseite der Membran erstreckt.

11. Verfahren nach Anspruch 11, worin der Träger elektrisch geladen werden kann.

12. Verfahren nach Anspruch 10, worin der Träger beheizt werden kann.

13. Eine Vorrichtung zum wenigstens teilweise Trennen eines flüssig-flüssig Gemisches, wobei die Vorrichtung eine erste Einlaßkammer und eine zweite Auslaßkammer, eine Membran trennend die Einlaß- und Auslaßkammern und Einrichtungen zum Umwandeln des flüssig-flüssig Gemisches in einen Sprühnebel umfaßt, umfassend die zu trennende Flüssigkeit vor dem Kontaktieren des Sprühnebels mit der Membran in der Einlaßkammer, so daß die zu trennende Flüssigkeit vorzugsweise durch die Membran hindurchtritt, zum Aufsammeln auf der anderen Seite der Membran.

14. Vorrichtung nach Anspruch 13, worin die Einlaßkammer im Betrieb einen höheren Druck aufweist als die Auslaßkammer.

15. Vorrichtung nach Anspruch 14, worin die Düse das flüssig-flüssig Gemisch in einen Sprühnebel umwandelt.

## Revendications

1. Procédé pour séparer un liquide d'un mélange liquide-liquide, **caractérisé en ce qu'**il comprend l'étape consistant à mettre en contact le mélange liquide-liquide avec un côté d'une membrane de séparation sous la forme d'une substance pulvérisée de telle sorte que le liquide qui doit être séparé passe de préférence à travers la membrane pour être récupéré de l'autre côté de la membrane.

2. Procédé selon la revendication 1, dans lequel la substance pulvérisée se présente sous la forme d'une substance pulvérisée vaporisée ou d'une substance pulvérisée sous forme de fines gouttelettes.

3. Procédé selon la revendication 2, dans lequel la membrane de séparation est une membrane semi-perméable.

4. Procédé selon la revendication 3, dans lequel la membrane est choisie parmi le groupe se composant d'une membrane rigide, d'une membrane souple, d'une membrane en céramique perforée rigide, d'une membrane métallique perforée rigide, d'une membrane polymère souple, d'une membrane en caoutchouc silicone semi-perméable, de membranes imprégnées de matériaux zéolite, d'une membrane en caoutchouc de nitrilebutadiène souple, d'une membrane en caoutchouc de polyisobutylène, d'une membrane en caoutchouc styrènebutadiène.

5. Procédé selon la revendication 3, dans lequel la membrane peut être chargée électriquement.

6. Procédé selon la revendication 2, dans lequel le mélange liquide-liquide passe à travers un pulvérisateur afin d'être transformé en substance pulvérisée.

7. Procédé selon la revendication 6, dans lequel le mélange est mélangé à un écoulement gazeux avant de passer à travers le pulvérisateur.

8. Procédé selon la revendication 7, dans lequel le gaz peut transporter une charge électrique.

9. Procédé selon la revendication 1, dans lequel un différentiel de pression est fourni à travers la membrane, le côté présentant la pression plus élevée étant le côté entrant en contact avec la substance pulvérisée.

10. Procédé selon la revendication 9, dans lequel un support est prévu pour la membrane, le support comprenant une maille qui s'étend de manière adjacente au côté de refoulement de la membrane.

11. Procédé selon la revendication 10, dans lequel le support peut être chargé électriquement.

12. Procédé selon la revendication 10, dans lequel le support peut être chauffé.

13. Appareil pour séparer au moins en partie un mélange liquide-liquide, l'appareil comprenant une première chambre d'entrée et une seconde chambre de sortie, une membrane séparant les chambres d'entrée et de sortie, ainsi que des moyens pour transformer le mélange liquide-liquide en substance pulvérisée se composant de liquide devant être séparé avant que la substance pulvérisée ne soit mise en contact avec la membrane dans la chambre d'entrée, de telle sorte que le liquide qui doit être séparé passe de préférence à travers la membrane afin d'être récupéré de l'autre côté de la membrane.

14. Appareil selon la revendication 13, dans lequel la chambre d'entrée, en fonctionnement, présente une pression plus élevée que la chambre de sortie.

15. Appareil selon la revendication 14, dans lequel un pulvérisateur transforme le mélange liquide-liquide en une substance pulvérisée.
